# EUROPEAN PATENT SPECIFICATION

(11) **EP 3 434 102 B1**
(45) Date of publication and mention of the grant of the patent: **27.05.2020**
(21) Application number: 18185364.9
(22) Date of filing: 24.07.2018
(51) Int. Cl.: A01N 1/00, G01N 1/30

(54) **METHOD FOR LONG-TERM PRESERVATION OF ANATOMICAL MATERIAL**
METHODE ZUR LANGZEITAUFBEWAHRUNG ANATOMISCHER MATERIALIEN
MÉTHODE DE PRÉSERVATION DE LONGUE DURÉE DE MATÉRIAUX ANATOMIQUES

(30) Priority: 26.07.2017 IT 201700085124
(43) Date of publication of application: 30.01.2019
(73) Proprietor: I.R.C.C.S. "Saverio De Bellis", 70013 Castellana Grotte (BA) (IT)
(72) Inventor: Armentano, Raffaele, 70124 Bari (IT)
(74) Representative: Bruni, Giovanni

(56) References cited:
- EP-A1- 0 822 403
- DE-B3-102014 108 642
- GB-A- 2 155 943
- US-A1- 2014 005 075
- WHALEN J D ET AL: "XYLENE SUBSTITUTES IN FROZEN SECTIONS", DERMATOLOGIC SURG, WILEY-BLACKWELL PUBLISHING, INC, NEW YORK, US, vol. 21, no. 3, 1 March 1995 (1995-03-01), page 241/242, XP008009400, ISSN: 1076-0512, DOI: 10.1016/1076-0512(94)00083-3

## Description

### TECHNICAL FIELD

The present invention relates to a new method for long term preservation of particularly interesting reduced anatomical pieces or surgical samples.

### BACKGROUND ART

The known art used for human or animal derived tissues testing and preservation consists in including sample fragments (of reduced dimensions) in paraffin upon suitable processing.

Such method known at the state of the art involves a series of disadvantages concerning the steps before the paraffin block realization. The most important ones thereamong are: the need to have wide rooms suitably furnished with closets provided with aspirators, according to the current law provisions; the personnel exposition to formalin exhalations; the passage of material from plastic containers to glass sealed containers or to plastic-vacuum; the alterations which, with time, occur inevitably in the cell structures; the formation of precipitates which interfere in the microscope observation (formalinic acid pigment) and the impossibility to preserve the sample for unlimited time.

In the technical field it is also known the method of preservation according to the Spalteholz methodology. Such method was introduced about 100 years ago. The principle of this method is based on the perfusion of the anatomical piece with barium sulfate, Prussian blue and Spalteholz fluid. This technique allows to provide clarified tridimensional macroscopic samples. But it has many disadvantages as the loss of the normal tissue architecture and the loss of the antigenic makeup. Some authors have proposed modifications of the method as for example Steinke H. 2001 et al, who proposes a modification of the technique, which is still very long and the continuous temperature variations cause a coarctation of the tissue. EP0822403 discloses a process for preparing organic tissues for inspection that comprises fixing a sample, dehydrating, clearing the sample, infiltrating it and embedding it. Alcohols are the preferred dehydrating agents. Clearing is done with many possible solvents. Limonene is mentioned but preferred are n-alkanes as hexane, heptane or octane. After drying by means of moderate heat, impregnation is carried out with a polymer as a polyethylene wax. Additive may be added as a terpene resin. Many steps are common to the method of the present application, nevertheless ethanol is not the preferred dehydrating solvent and limonene is not the preferred clarifying solvent.

### SUMMARY OF THE INVENTION

Aim of the present invention is to overcome the above cited drawbacks by means of the implementation of a method of preservation of anatomical pieces or fragments (reduced samples) which allows both a dehydration of the tissues after a variable drying time with water substitution for an inert substance and a following rehydration, reversible steps, also after long time intervals, up to 20 years according to our experience, in order to carry out anatomical pathology lab research without making use of the preservation of the anatomical pieces in formalin or of the reduced samples in paraffin. Another aim of the invention is always to have particularly interesting anatomical material at one's disposal for iconographic, didactic, study aims and waiting for new discoveries and/or bio-markers.

Yet another aim of the invention is the storage optimization of the anatomical substrate under treatment according to the method according to the present invention, thus guaranteeing minimum dimensions in simple cellophane bags without particular further measures and, not less importance, the possibility to preserve tissues for an unlimited time interval while maintaining their own micro and macro-features.

The prefixed aims of the invention are reached by the implementation of the new method proposed in the main claim 1.

### BRIEF DESCRIPTION OF THE DRAWINGS

The detailed description will refer to the appended drawings 1/3 to 3/3, in which there are shown the results obtainable by the implementation of the method, object of the present invention, in an absolutely not limiting way. In particular:
Figure 1 shows an example of a dehydrated final product according to the new method, relating to a pig heart with cutting, which exposes the four chambers at the same time;
Figure 2 shows a second example of a dehydrated final product relating to a neoplastic stenosis on segmental colonic resection;
Figure 3 shows the classic ematoxylin/eosin staining in a case of polypoid early gastric cancer, rehydrated after nine years;
Figure 4 shows the histochemical staining for highlighting mucins (PAS) for the same case of the previous figure;
Figure 5 shows the immunohistochemical test for highlighting cytokeratins with monoclonal antibody MNF116 for the same case of the previous figure 3.

### DETAILED DESCRIPTION

The method object of the present invention was tested starting from material included in paraffin to be wasted upon filing of diagnosis as well as reports about patients to whom anonymity was guaranteed. The substrate used for the cases was surgical material consisting in: digestive tract exophytic and/or infiltrating tumors, bowel inflammatory stenoses, resected parenchymal organs. Sometimes abortive material was also used. In other cases there were used animal viscera coming from authorized slaughterhouses. With regard to the bone material for carrying out the method a demineralization preparatory step is provided. The anatomic substrate under treatment was retrieved from containers destined to specialized companies responsible for the destruction. In the case in point it was material fixed in formalin, in a mixture of various anatomical parts, with many parts of the same type, and so not associable to a particular patient. Briefly, the method comprises a sequence of macro-steps, the most important ones thereof being: a pretreatment of the material available and previously fixed in formalin, a sequence of steps for the dehydration of the material by treatment with ethyl alcohol, a sequence of steps for the clarification of the material by using some clarifier chemical compounds and a final drying step for obtaining the final product in dehydrated form.

More in detail the method starts with a step of material taking and washing, the material being arranged inside a unique container, by means of spring running water for formalin elimination for an average time interval of 3 hours. In the following, a dehydration step is carried out which consists in 2 subsequent passages which last 2 hours each in ethyl alcohol at 70°, 90°, 95°, respectively, absolute alcohol. In the following the material is passed in a non-toxic terpene derivative or clarifier for a time interval of 10 minutes on stirrer. The used clarifier is D-Limonene (Microclearing-DIAPATH). At this point of the method it is possible to remove the liquid part and to arrange the fragments in D-Limonene at ambient temperature, inside a glass container with hermetic seal for an overnight treatment. The ratio between the total pieces volume and clarifier volume has not to be lower than 1:15. At the same time a 1:10 solution is prepared of a D-Limonene-isoparaffinic acrylic polymer where the fragments are to be immerged in the next step. In this last solution the fragments rest for a whole day. In the last step the fragments taken from the container are dripped and are given the desired shape, thanks to the plasticity of the material before drying. The desired shape is given by positioning a plurality of removable supporting means, inside a ventilated cap provided with aspirator.

The drying step of the material under treatment which leads to the final product, can be realized after a variable time interval ranging from minimum 2 hours to maximum 4 hours, according to the dimensions of the material or of the piece under treatment.

The steps of the new just described method, starting from a pre-existing substrate fixed in formalin up to obtain the dehydrated final product, are summed up in the following:

| Steps | Time |
|---|---|
| a) pretreatment of the material (washing) | 3 hours |
| b) first treatment with ethyl alcohol at 70° | 2 x 2 hours |
| c) second treatment with ethyl alcohol at 90° | 2 x 2 hours |
| d) third treatment with ethyl alcohol at 95° | 2 x 2 hours |
| e) fourth treatment with absolute ethyl alcohol | 2 x 2 hours |
| f) treatment with clarifier on stirrer | 10 minutes |
| g) treatment with clarifier in hermetic container at ambient temperature | Overnight |
| h) treatment with acrylic polymer-clarifier | 1 day |
| i) drying | About 3 hours |

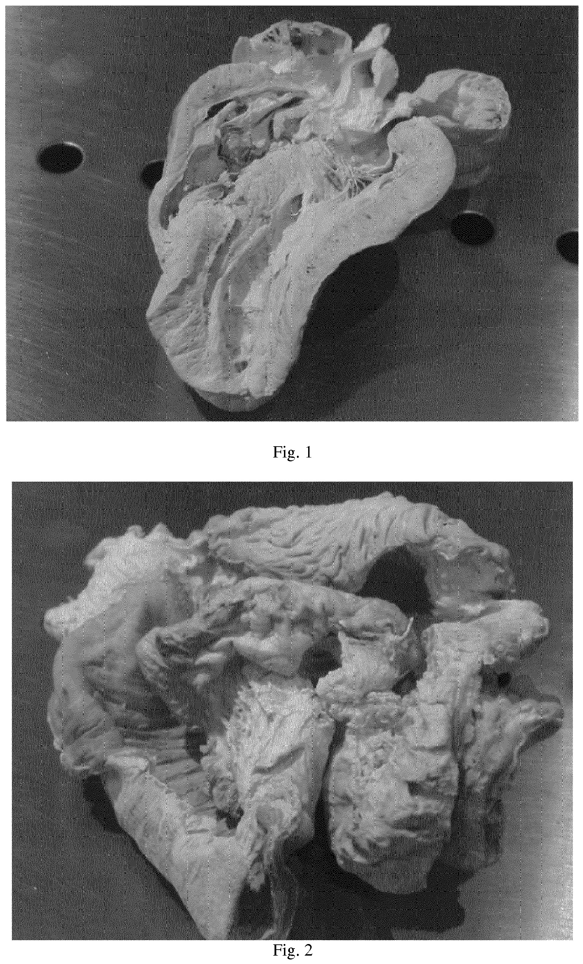

As a way of example, as it is shown in figures 1 and 2, the final product has a strong white-grey colour, it is oudorless or slightly lemon scented, it is not greasy, it is little ductile and has a dry weight corresponding on average to one quarter of the pre-existing material fixed in formalin. In the final product it is possible to recognize the ratios between the various structures, as well as to appreciate the vascularization and the pathological details as for example cancers etc. Moreover, the final product is well apt to be cut, paying attention to use very sharp blades and it is possible to establish the continuity, after possible cuts, by using common acrylic glues. It is rather clear that the final product thus obtained by means of the new method is characterized by a minimum dimension and can be safely stored in cellophane bags without particular or other measures.

More in particular, figure 1 highlights the cutting surface of a pig heart, with cutting exposing the four chambers at the same time. Besides the base structures, there can be appreciated and perfectly recognized the wall of the ventricles, the atrial walls, the septa and the valve apparatus with relative papillary muscles and tendinous cords. Figure 2 shows instead a typical condition of human pathology: a neoplastic stenosis on segmental colonic resection. Besides the stenosis it is possible to appreciate the inner structure of the viscera, with the classic organization in layers of the wall and mucosal plicae. Under the serous surface there can be seen the accumulations of fat which are however reduced due to melting during processing.

As yet previously said, the advantages of the method object of the present invention are mainly the possibility to reproduce after time the routine methods used to carry out tests in anatomical pathology labs. To such aim, in fact, after obtaining the dehydrated final product as yet described, it is possible to implement an inverted method of rehydration of the dehydrated final product and to carry out, also after long time, the needed lab tests.

Such inverted method of rehydration is carried out firstly by taking a certain quantity of material from the dehydrated final product according to the just described method, and by arranging the material in little cells commonly used for surgical pieces sampling. It is sufficient a section of material with thickness about 5 mm.

Substantially the method consists in two steps. The first step provides the immersion of the little cells in D-limonene according to a volume ratio 10:1. Such treatment has to be carried out changing the clarifier three times in three consecutive days. The second step consists in the realization of the paraffin block, by carrying out two different modes with the same final result. In the first mode the realization of the paraffin block occurs in a vacuum automatic processor; the process occurs overnight and is made up of the following steps:
- 3 subsequent passages lasting 2 hours in ethyl alcohol at 95°;
- 3 subsequent passages lasting 2 hours in ethyl alcohol in absolute alcohol;
- 3 subsequent passages lasting 2 hours in D-limonene;
- 3 subsequent passages lasting 2 hours in paraffin.

After such passages, the piece is ready for being included in the paraffin block.

Alternatively, the second mode of realization of the paraffin block occurs directly upon bath in hot paraffin for 2 hours, skipping the passage in alcohols of the previously described mode.

Once the paraffin block is obtained, it is possible to obtain sections about 3 micron to start the routine treatments, used in anatomical pathology labs, as well as it is possible to arrange the slices on gelatin coated slides for immunohistochemical staining.

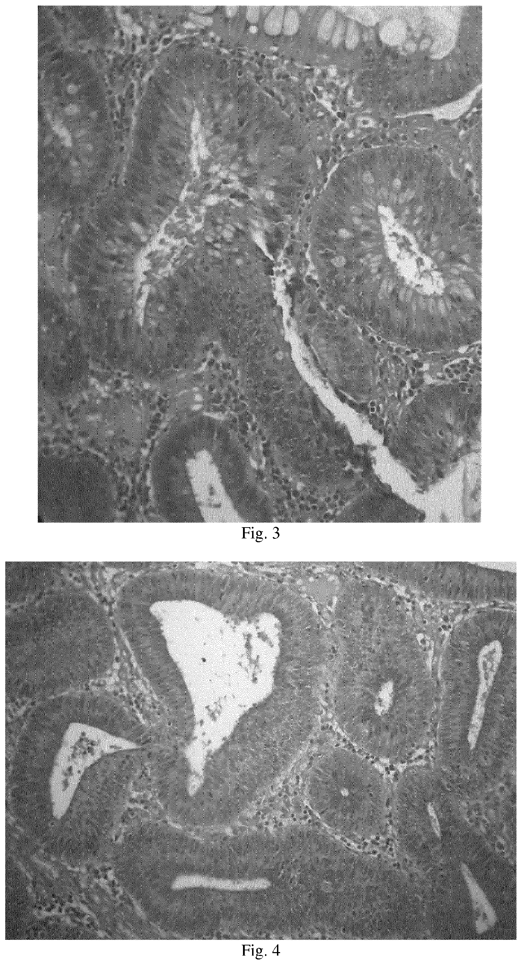

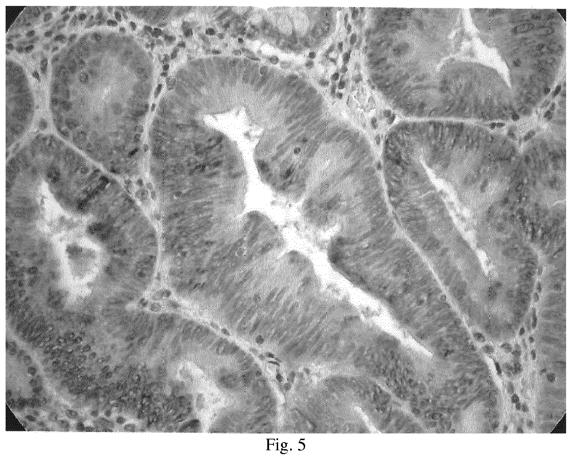

As it can be observed from figures 3 to 5, no significant difference is to be signaled during microscope observation between stained sections with the classic methods coming from material in formalin with respect to the dehydrated and rehydrated material according to the method object of the present invention. In fact, figures 3 to 5 show respectively the classic ematoxylin/eosin staining, the PAS for highlighting mucins and the immunohistochemical test for highlighting cytokeratins with monoclonal antibody MNF116 on a case of polypoid early gastric cancer type I, diagnosed some years before the dehydration occurred in 1996. The stainings were carried out in August 2006.

Therefore, it is simply and immediately understood that the effect of the method has some results for the diagnostic interpretation.

The supposed mechanism is that the clarifier facilitates the penetration of methyl methacrylate and that the polymerization of this last one provides a sort of scaffolding besides a protective film around the fine tissue structures. The methacrylate behaves as an inert substance, it does not react with tissue constituents and does not distort the antigenic makeup. We have demonstrated above all that by analyzing the tissue after years, 10 and 20 respectively, its histological and immunological features are maintained unaltered.

## Claims

1. A method for long term preservation of anatomical or surgical material, comprising the following steps:
a. pretreatment of the material available and previously fixed in formalin;
b. dehydration of the material by treatment with ethyl alcohol at different gradations;
c. clarification of the material by using D-limonene and an acrylic polymer;
d. dripping of the material fragments taken from the previous clarification step and giving the desired shape;
e. drying of the material and obtaining the dehydrated final product;
f. taking off a small quantity of material from the dehydrated final product;
g. arrangement of the taken material in sampling little cells for surgical pieces;
h. immersion of the little cells containing the material in D-limonene according to a volume ratio 10:1;
i. reiteration of step h. for three consecutive days by changing said D-limonene for 3 times;
j. realization of a paraffin block from which the material, which can be analyzed in anatomical pathology labs, is obtained.
said method being **characterized in that**:
said clarification step c) of the material comprises the following steps:
i. a first treatment of the material in a stirrer with D-Limonene for a time interval of 10 minutes;
ii. a second treatment of the material in a hermetic container at ambient temperature by means of D-Limonene overnight.
iii. a third treatment of the material in a 1:10 solution of an acrylic polymer for a whole day.

2. A method according to claim 1, **characterized in that** said dehydration step b) of the material comprises 2 subsequent passages lasting 2 hours each in ethyl alcohol, respectively at 70°, 90°, 95° and Absolute;

3. A method according to claim 1, **characterized in that** said acrylic polymer is a D-Limonene-isoparaffinic acrylic polymer.

4. A method according to any one of claims 1 to 3, **characterized in that** the ratio between total volume of the material and volume of clarifier is not lower than 1:15.

5. A method according to any one of claims 1 to 4, **characterized in that** said pre-treatment step of the material consists in the washing of the same material inside a unique container by means of spring running water for 3 hours.

6. A method according to any one of claims 1 to 5, **characterized in that** said drying step of the material under treatment ranges from minimum 2 hours to maximum 4 hours, according to the dimensions of the material or of the piece under treatment.

7. A method according to any one of claims 1 to 6, **characterized in that** said realization step of a paraffin block is carried out in a vacuum automatic processor overnight by means of the following steps:
- three subsequent passages lasting 2 hours in ethyl alcohol at 95°;
- three subsequent passages lasting 2 hours in absolute ethyl alcohol;
- three subsequent passages lasting 2 hours in a clarifier;
- three subsequent passages lasting 2 hours in paraffin.

8. A method according to any one of claims 1 to 6, **characterized in that** said realization step of a paraffin block is carried out directly upon bath in hot paraffin for 2 hours.

## Patentansprüche

1. Verfahren zur Langzeitkonservierung von anatomischem oder chirurgischem Material, das die folgenden Schritte umfasst:
a. Vorbehandlung des verfügbaren und zuvor in Formalin fixierten Materials;
b. Dehydratisierung des Materials durch Behandlung mit Ethylalkohol in verschiedenen Abstufungen;
c. Klärung des Materials unter Verwendung von D-Limonen und einem Acrylpolymer;
d. Tropfen der Materialfragmente, die aus dem vorherigen Klärungsschritt entnommen wurden und die gewünschte Form ergeben;
e. Trocknung des Materials und Erhaltung des dehydrierten Endprodukts;
f. Entzug von einer kleinen Menge des Materials aus dem entwässerten Endprodukt;
g. Anordnung des entnommenen Materials in kleinen Probenahme-Zellen für chirurgische Stücke;
h. Eintauchen der kleinen Zellen, die das Material enthalten, in D-Limonen gemäß einem Volumenverhältnis von 10:1;
i. Wiederholung von Schritt h. über drei aufeinanderfolgende Tage durch dreimaliges Wechseln des D-Limonens;
j. Realisierung eines Paraffinblocks, aus dem das Material gewonnen wird, das in anatomischen Pathologielabors analysiert werden kann,
wobei das Verfahren zeichnet sich dadurch aus, dass:
der Klärungsschritt c) des Materials umfasst die folgenden Schritte:
I. eine erste Behandlung des Materials in einem Rührer mit D-Limonen für ein Zeitintervall von 10 Minuten;
II. eine zweite Behandlung des Materials in einem hermetischen Behälter bei Umgebungstemperatur mittels D-Limonen über Nacht;
III. eine dritte Behandlung des Materials in einer 1:10 Lösung eines Acrylpolymers für einen ganzen Tag.

2. Verfahren nach Anspruch 1, **dadurch gekennzeichnet, dass** der Dehydratisierungsschritt b) des Materials 2 aufeinanderfolgende Passagen umfasst, die jeweils 2 Stunden in Ethylalkohol bei 70°, 90°, 95° bzw. Absolut dauern;

3. Verfahren nach Anspruch 1, **dadurch gekennzeichnet, dass** das Acrylpolymer ein D-Limonen-Isoparaffin-Acrylpolymer ist.

4. Verfahren nach einem der Ansprüche 1 bis 3, **dadurch gekennzeichnet, dass** das Verhältnis zwischen dem Gesamtvolumen des Materials und des Volumens der Klärvorrichtung nicht niedriger als 1:15 ist.

5. Verfahren nach einem der Ansprüche 1 bis 4, **dadurch gekennzeichnet, dass** der Vorbehandlungsschritt des Materials eine Waschung desselben Materials innerhalb eines einzigartigen Behälter, durch Quellenwasser für 3 Stunden, umfasst.

6. Verfahren nach einem der Ansprüche 1 bis 5, **dadurch gekennzeichnet, dass** der Trocknungsschritt des Materials eine Behandlung im Bereich von mindestens 2 Stunden bis maximal 4 Stunden, je nach den Abmessungen des Materials bzw. des Werkstücks bei der Behandlung, umfasst.

7. Verfahren nach einem der Ansprüche 1 bis 6, **dadurch gekennzeichnet, dass** der Realisierungsschritt eines Paraffinblocks in einem unter Vakuum automatischen Prozessor über Nacht durch folgende Schritte durchgeführt wird:
- drei aufeinanderfolgende Passagen von 2 Stunden Dauer in Ethylalkohol bei 95°;
- drei aufeinanderfolgende Passagen von 2 Stunden Dauer in absolutem Ethylalkohol;
- drei aufeinanderfolgende Passagen von 2 Stunden Dauer in einem Klärer;
- drei aufeinanderfolgende Passagen von 2 Stunden Dauer in Paraffin.

8. Verfahren nach einem der Ansprüche 1 bis 6, das **dadurch gekennzeichnet ist, dass** der Realisierungsschritt eines Paraffinblocks direkt nach dem Bad in heißem Paraffin für 2 Stunden durchgeführt wird.

## Revendications

1. Procédé de conservation à long terme de matériel anatomique ou chirurgical, comprenant les étapes suivantes:
a. prétraitement du matériel disponible et préalablement fixé au formol;
b. déshydratation du matériel par traitement avec de l'alcool éthylique à différents degrés;
c. clarification du matériel en utilisant du D-limonène et un polymère acrylique;
d. égouttement des fragments de matériel extraits de l'étape de clarification précédente et donnant la forme souhaitée;
e. séchage du matériel et obtention du produit final déshydraté;
f. prise d'une petite quantité de matériel du produit final déshydraté;
g. disposition du matériel prélevé dans de petites cellules d'échantillonnage pour des pièces chirurgicales;
h. immersion des petites cellules contenant le matériel dans du D-limonène selon un rapport en volume de 10:1;
i. réitération de l'étape h. pendant trois jours consécutifs en changeant 3 fois le D-limonène;
j. réalisation d'un bloc de paraffine à partir duquel le matériel, qui peut être analysé dans les laboratoires de pathologie anatomique, est obtenu, ledit procédé étant **caractérisé en ce que**:
ladite étape de clarification c) du matériel comprend les étapes suivantes:
I. un premier traitement du matériel dans un agitateur avec du D-limonène pendant un intervalle de temps de 10 minutes;
II. un deuxième traitement du matériel dans un récipient hermétique à température ambiante au moyen du D-Limonène pendant une nuit;
III. un troisième traitement du matériel dans une solution 1:10 d'un polymère acrylique pendant une journée entière.

2. Procédé selon la revendication 1, **caractérisé en ce que** ladite étape b) de déshydratation du matériel comprend 2 passages ultérieurs d'une durée de 2 heures chacun dans l'alcool éthylique, respectivement à 70°, 90°, 95° et Absolu.

3. Procédé selon la revendication 1, **caractérisé en ce que** ledit polymère acrylique est un polymère acrylique iso-paraffinique de D-limonène.

4. Procédé selon l'une quelconque des revendications 1 à 3, **caractérisé en ce que** le rapport entre le volume total du matériel et le volume du clarificateur n'est pas inférieur à 1:15.

5. Procédé selon l'une quelconque des revendications 1 à 4, **caractérisé en ce que** l'étape de prétraitement du matériel consiste à laver le même matériel à l'intérieur d'un récipient unique au moyen d'eau de source courante pendant 3 heures.

6. Procédé selon l'une quelconque des revendications 1 à 5, **caractérisé en ce que** l'étape de séchage du matériel en cours de traitement va de minimum 2 heures à maximum 4 heures, selon les dimensions du matériel ou de la pièce en cours de traitement.

7. Procédé selon l'une quelconque des revendications 1 à 6, **caractérisé en ce que** l'étape de réalisation d'un bloc de paraffine est effectuée dans un processeur automatique sous vide pendant la nuit au moyen des étapes suivantes:
- trois passages ultérieurs d'une durée de 2 heures dans l'alcool éthylique à 95°;
- trois passages ultérieurs d'une durée de 2 heures dans de l'alcool éthylique absolu;
- trois passages ultérieurs d'une durée de 2 heures dans un clarificateur;
- trois passages ultérieurs d'une durée de 2 heures en paraffine.

8. Procédé selon l'une quelconque des revendications 1 à 6, **caractérisé en ce que** l'étape de réalisation d'un bloc de paraffine est réalisée directement dans un bain de paraffine chaude pendant 2 heures.
